# EUROPEAN PATENT APPLICATION

(11) **EP 4 620 733 A1**
(43) Date of publication of application: **24.09.2025**
(21) Application number: 23890932.9
(22) Date of filing: 31.10.2023
(51) Int. Cl.: B60P 1/44, B66F 9/08

(54) **SYSTEM FOR ADJUSTING THE HEIGHT OF CARGO BOXES ON TRAILERS AND THE LIKE**

(30) Priority: 14.11.2022 ES 202231887 U
(71) Applicant: Mecadetol, S.A., 31119 Imarcoain (Navarra) (ES)
(72) Inventor: ARRIOLA BONETA, Fernando, 31119 IMARCOAIN (NAVARRA) (ES)
(74) Representative: Cabinet Beau de Loménie
(86) International application number: PCT/ES2023/070643
(87) International publication number: WO 2024/105287

(57) **Abstract**

The present invention relates to a system for adjusting the height of cargo boxes on trailers and the like, the cargo box comprising a perimeter structure formed with telescopic posts having a varying length, comprising a lower bar that is vertically attached to the bottom of the cargo box and a sliding bar that slides on the lower bar and is attached to the top of the cargo box, where a skid is arranged between the two bars and components of each telescopic post. Said skid incorporates a pin by means of which a resting stop of the sliding bar is defined, the skid being included between the lower bar and a profile, and said profile is attached at the rear of said lower bar and comprises a succession of perforations with respect to the perforations that the skid can selectively engage and disengage by means of the pin for the resting stop of the sliding bar in varying positions.

## Description

### Technical field

The present invention relates to the freight transport sector, specifically to a system for adjusting the height of cargo boxes on vehicles intended to transport goods, said system having been developed in a way that makes it possible to easily increase the capacity of cargo boxes in order to adapt them to the requirements of planned shipments.

### State of the art

Cargo boxes on trailers and freight transport vehicles usually have a perimeter structure formed with telescopic posts which can be adjusted in height to modify the capacity of the cargo box based on the amount of cargo to be transported.

Said posts of the perimeter structure of the cargo boxes usually consist of two bars coupled together to form a telescopic assembly, so that one of the bars is fixedly secured to the bottom of the cargo box and the other bar, which is slidably coupled to the first bar, is secured to the top of the cargo box, so that the height dimension of the cargo box can be adjusted by varying the longitudinal length of said posts of the perimeter structure. For this purpose, the lower bar of the telescopic posts has perforations in which a pin is selectively engaged and on which the upper sliding bar rests, thus determining the height of the cargo box based on the perforation in which said resting pin of the upper sliding bar of the telescopic post is engaged in each case.

Nevertheless, the resting pin of the upper sliding bar of the telescopic posts is an independent part, which, due to vibrations and shocks that may be produced in the cargo boxes during transport, can come out of the engaging perforation and be lost. To prevent this, the pins are usually tied down with fastening cables, but this solution is not very effective, as the cables often break due to shocks from the cargo being transported, which means that the risk of loss of the pin and its consequences persists.

Therefore, since current techniques do not effectively solve the problems of the system for adjusting the height of cargo boxes due to the possible loss of the pins that establish the selective length positions of the telescopic posts of the perimeter structure of the cargo boxes, it is clear that a new solution must be developed to eliminate these problems, in order to ensure safe transport for road traffic and transported goods.

### Object of the invention

In order to meet the aforementioned safety objectives, the present invention proposes a system for adjusting the height of cargo boxes on trailers and similar, in a way that effectively prevents the loss of the pin of the telescopic posts of the perimeter structure of the cargo boxes by incorporating said pin inside the telescopic posts themselves, thus avoiding the risk of losing the pin.

This system for adjusting the height of cargo boxes according to the subject matter of the invention comprises a skid that is arranged inside the telescopic posts of the perimeter structure of the cargo boxes, said telescopic posts formed by two bars associated with a sliding coupling between them, the aforementioned skid incorporating a pin in a fixed assembly, forming a single piece that makes it possible to establish selective engagement in perforations of one of the bar components of the telescopic post. In this way, said pin defines the support of the sliding bar component of the telescopic post in different length positions of the post. Furthermore, the fact that the skid and the pin form a single piece makes the skid more resistant to shocks and impacts and simplifies the construction.

To incorporate the skid into the telescopic post under these conditions, a profile having a cross-section corresponding to the geometry of the skid, preferably having a U-shaped cross-section, is attached at the rear of the bar intended to receive the pin of the skid by engagement. A succession of perforations are made longitudinally in said profile, so that between the U-shaped profile and the lower bar to which it is attached, there is a space in which the skid is slidably housed. In this way, the skid is placed in varying positions along the lower bar of the telescopic post, based on the perforation of the U-shaped profile with respect to that which establishes engagement, for the purpose of establishing the support of the sliding bar component of the telescopic post on the pin of the skid in order to adopt respective varying length positions of the telescopic post.

The perforations of the U-shaped profile are preferably elongated, ending in a widened area at one end, while the pin of the skid has a widening at its end, so that to engage the pin in the aforementioned perforations of the U-shaped profile, the widened end of the pin must be inserted through the widened end area of the perforation in which it is to be engaged, allowing the pin to then slide by moving the skid. This allows the narrowest part of the pin to be housed in the narrowest part of the groove, which establishes engagement that prevents the pin from coming out of the engaging groove as long as the skid does not move again until the widened part of the pin coincides with the widened area of the engaging groove, thus resulting in a secure arrangement that prevents the pin from accidentally coming out of the engaging groove and being lost.

According to a feature of the invention, the lower bar has a window at the front and through which the skid can be handled to move it between the varying stop positions of the sliding bar.

To facilitate handling of the skid, it is envisaged that the ends of said skid have a preferably rounded shape that is adapted for gripping with the index finger and thumb.

According to another feature of the invention, the pin can be attached by mechanical means to the skid, for example, by means of a washer and a rivet. This configuration allows the pin to be replaced if wear occurs due to continuous use.

According to another feature of the invention, the resting end of the sliding bar is on the pin with a geometry corresponding to said pin. Given this configuration, an adjustment between the two elements can be made so that they match and vibrations are prevented.

With this embodiment of the invention, the height of the cargo boxes can therefore be modified quickly and safely, improving the time required to carry out this modification, thus saving assembly costs.

### Description of the figures

To facilitate understanding of the functionality of the invention, the description is accompanied by drawings that are merely illustrative, but not limiting.

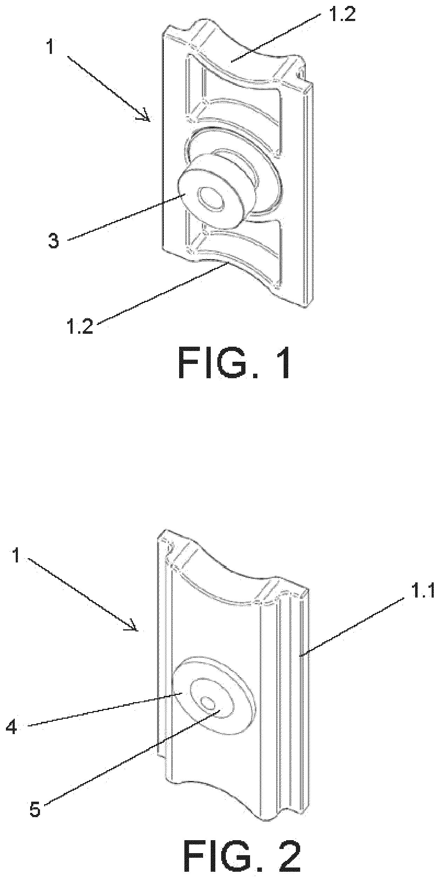

Figures 1 and 2 show perspective views, showing at the front and back respectively, of the skid used to set the length positions of the telescopic posts for adjusting the height of the cargo boxes, according to the system of the invention.
Figures 3, 4 and 5 show perspective views of the assembly sequence of the adjustment skid on a telescopic post.

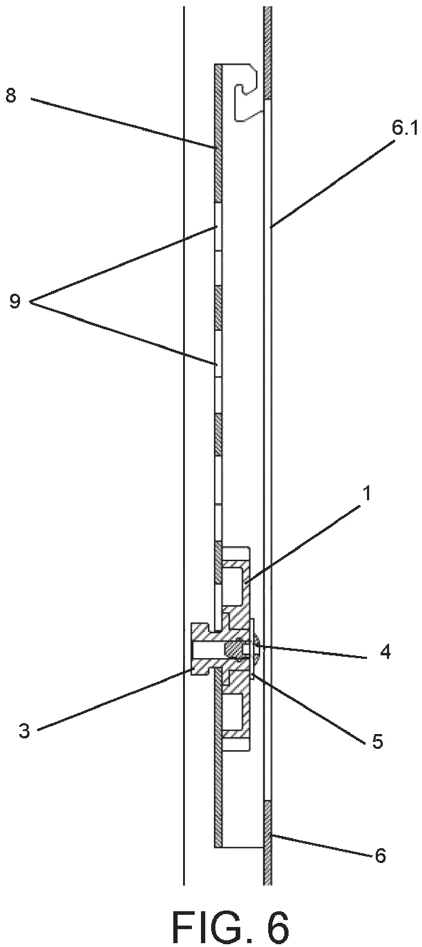

Figure 6 shows a side sectional view of the lower bar with the adjustment skid mounted and attached to one of the positions.
Figure 7 shows a perspective view of a complete telescopic post equipped with the adjustment system of the invention.

### Detailed description of the invention

The claimed invention relates to a system for adjusting the height of cargo boxes on trailers and the like that have a perimeter structure formed with telescopic posts (2) having a varying length, which consist of a lower bar (6) that is attached to the structure of the bottom of the cargo box and an upper sliding bar (7) that is attached to the upper structure of the cargo box.

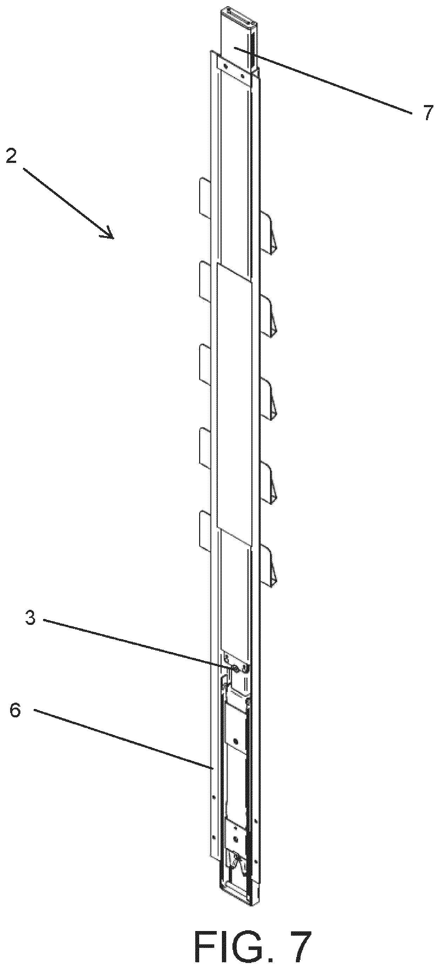

According to the invention, a skid (1) is arranged between the bars (6) and (7) of each telescopic post (2), said skid incorporating a pin (3) by means of which a stop for supporting the upper sliding bar (7) is defined, making it possible to establish said support of the sliding bar (7) in varying length positions of the telescopic post (2) as shown in figure 7.

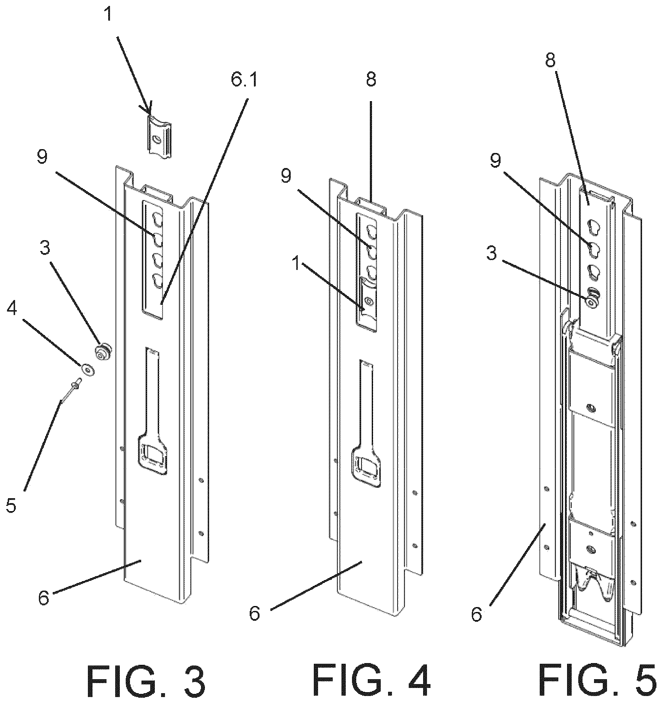

According to a non-limiting embodiment, the pin (3) is assembled on the skid (1) by means of fastening with a washer (4) and a rivet (5) forming a single piece, the pin (3) being in a protruding position towards the rear of the skid (1), said skid (1) being included between the lower bar (6) of the telescopic post (2) and a profile (8) having a U-shaped cross-section which is attached at the rear of the mentioned lower bar (6) as shown in figure 3.

As shown in figure 4, in this arrangement the skid (1) is between the lower bar (6) and the profile (8) having a front clearance that allows the pin (3) to engage and disengage with respect to perforations (9) that the profile (8) has in longitudinal succession. This makes it possible to vary the position of the skid (1) to establish the support of the sliding bar (7) in varying positions that define different lengths of the telescopic post (2) and, therefore, different height adjustment positions to vary the capacity of the cargo box in which the telescopic post (2) is arranged.

The perforations (9) are elongated in the longitudinal direction of the profile (8), each perforation (9) having a widened area at the upper end, while the pin (3) that is incorporated in the skid (1) has a section which width corresponds to that of the narrowest part of the perforations (9). The free end of said pin (3) has a widening which peripheral dimension corresponds to that of the widened end area of the aforementioned perforations (9), so that in order to engage said pin (3) with respect to the perforations (9), the widened end of the pin (3) must be inserted through the widened end area of the perforation (9) in which the engagement is to be established. Subsequently, the narrow section of the pin (3) can be slid through the narrow area of the perforation (9) by moving the skid (1), whereby said engagement of the pin (3) establishes a retention that prevents disengagement as long as the skid (1) does not move in the reverse direction to the position where the widened end of the pin (3) can come out through the widened end area of the perforation (9).

For this functionality, the lower bar (6) of the telescopic post (2) is provided with a vertically elongated window (6.1) at the front, through which the skid (1) can be handled to engage and disengage the pin (3) with respect to the perforations (9) of the profile (8) and to move between the engaging positions with respect to the different perforations (9); the skid (1) is provided with shaped sides (1.1) that establish guidance on the sides of the window (6.1), having the front clearance necessary for the pin (3) to engage and disengage with respect to the perforations (9) of the profile (8), while the upper and lower ends (1.2) of the skid (1) are provided with an anatomical shape that facilitates gripping with the fingers to handle the skid (1) when changing the stop positions of the sliding bar (7) of the telescopic post (2).

In any case, the dimensioning of the skid (1) must correspond to the gap between the lower bar (6) of the telescopic post (2) and the profile (8), so that said skid (1) is free to move from the front and it must also correspond to the width of the window (6.1), on which the sides (1.1) of the skid (1) rest in a guiding arrangement.

The assembly fastening of the pin (3) on the skid (1) by means of a washer (4) and a rivet (5) is not a limiting solution and any other equivalent means of fastening, such as screwing, may be applied without altering the subject matter of the invention.

## Claims

1. A system for adjusting the height of cargo boxes on trailers and the like, the cargo box comprising a perimeter structure formed with telescopic posts (2) having a varying length, comprising a lower bar (6) that is vertically attached to the structure of the bottom of the cargo box and a sliding bar (7) that slides on the lower bar (6) and is attached to the structure of the top of the cargo box, **characterised in that** a skid (1) is arranged between the two bars (6) and (7) components of each telescopic post (2), said skid incorporating a pin (3) by means of which a resting stop of the sliding bar (7) is defined, the skid (1) being included between the lower bar (6) and a profile (8) having a cross-section corresponding to the geometry of the skid (1), and said profile (8) is attached at the rear of said lower bar (6) and longitudinally comprises a succession of perforations (9) with respect to the perforations that the skid (1) can selectively engage and disengage by means of the pin (3) for establishing the resting stop of the sliding bar (7) in varying positions.

2. The system for adjusting the height of cargo boxes on trailers and the like, according to claim 1, **characterised in that** the perforations (9) are elongated in the longitudinal direction of the profile (8), each perforation (9) having a widened area at the upper end, while the pin (3) has a section having a width equivalent to that of the perforations (9), with a widening at the end, having a peripheral dimension corresponding to that of the widened area of said perforations (9), which allows the respective engagement.

3. The system for adjusting the height of cargo boxes on trailers and the like, according to claims 1 or 2, **characterised in that** the lower bar (6) has a window (6.1) at the front and through which the skid (1) can be handled to move it between the varying stop positions of the sliding bar (7).

4. The system for adjusting the height of cargo boxes on trailers and the like, according to any one of the preceding claims, **characterised in that** the skid (1) is included in a guided assembly between the lower bar (6) and the profile (8) having a clearance that allows the pin (3) to engage and disengage with respect to the perforations (9).

5. The system for adjusting the height of cargo boxes on trailers and the like, according to any one of the preceding claims, **characterised in that** the skid (1) has shaped sides (1.1) that rest in a guiding arrangement on the sides of the window (6.1).

6. The system for adjusting the height of cargo boxes on trailers and the like, according to any one of the preceding claims, **characterised in that** the skid (1) has upper and lower ends (1.2) with a shape adapted for gripping with the fingers.

7. The system for adjusting the height of cargo boxes on trailers and the like, according to any one of the preceding claims, **characterised in that** the pin (3) can be attached to the skid (1) with a washer (4) and a rivet (5).

8. The system for adjusting the height of cargo boxes on trailers and the like, according to any one of the preceding claims, **characterised in that** the resting end of the sliding bar (7) is on the pin (3) with a geometry corresponding to said pin (3).
